# EUROPÄISCHE PATENTSCHRIFT

(11) **EP 2 818 682 B1**
(45) Veröffentlichungstag und Bekanntmachung des Hinweises auf die Patenterteilung: **10.05.2017**
(21) Anmeldenummer: 14173450.9
(22) Anmeldetag: 23.06.2014
(51) Int. Cl.: F16L 3/237, F16L 41/02, F02M 35/10

(54) **Anschlussanordnung**
Connection assembly
Système de raccordement

(30) Priorität: 25.06.2013 DE 102013212116
(43) Veröffentlichungstag der Anmeldung: 31.12.2014
(73) Patentinhaber: Mahle International GmbH, 70376 Stuttgart (DE)
(72) Erfinder: Bauer, Swen-Juri, 70374 Stuttgart (DE); Grüner, Andreas, 73110 Hattenhofen (DE); Springmann, Katrin, 72172 Hopfau (DE); Teubner, Andrea, 73492 Rainau-Schwabsberg (DE)
(74) Vertreter: BRP Renaud & Partner mbB Rechtsanwälte Patentanwälte Steuerberater

(56) Entgegenhaltungen:
- EP-A1- 2 799 751
- EP-A2- 0 969 188
- WO-A1-94/25788
- DE-A1- 4 205 063
- DE-A1-102006 061 112
- FR-A1- 2 461 874
- JP-A- 2003 207 083
- JP-U- H0 640 355
- US-B1- 6 908 117

## Beschreibung

Die Erfindung betrifft eine Anschlussanordnung zum mechanischen und fluidischen Verbinden wenigstens einer Anschlussleitung mit einem Anschluss, insbesondere an einem Turbolader.

Als Hubkolbenmotor wird im Folgenden jeglicher Motor verstanden, der die Volumenänderung eines Gases über einen sich im Wesentlichen linear bewegenden Kolben, eine Pleuelstange und eine Kurbel in eine Drehbewegung umsetzt. Bei nicht aufgeladenen Hubkolbenmotoren, sogenannten Saugmotoren, erzeugt der Kolben einen Unterdruck im Ansaugtrakt des Motors, in welchen die unter Atmosphärendruck stehende Außenluft einströmt. Mit wachsender Drehzahl reicht dieser Unterdruck nicht mehr aus, um eine größtmögliche Menge an Luft oder Kraftstoff-Luft-Gemisch in den Verbrennungsraum des Motors zu befördern. Zur Erhöhung der Motorleistung werden moderne Hubkolbenmotoren daher vielfach mit einer als Abgasturbolader (ATL) oder Turbolader bekannten Vorrichtung ausgerüstet, welches eine Turbine sowie einen durch diese angetriebenen Verdichter umfasst und den Luftdurchsatz des Kolbens erhöht oder dessen Ansaugarbeit verringert.

Abgasturbolader verfügen somit funktionsgemäß über zumindest zwei wesentliche dem Verdichter zugeordnete Anschlüsse: einen ersten Anschluss zur Einleitung optional mittels eines Luftfilters gereinigter Ansaugluft sowie einen zweiten Anschluss zur Ableitung verdichteter sogenannter Ladeluft, welche über einen optionalen Ladeluftkühler (LLK) dem Verbrennungsraum zugeführt wird. Diese Anschlüsse sind mit entsprechenden Anschlussleitungen zu verbinden, wodurch sich eine Anschlussanordnung der eingangs genannten Art ergibt.

Problematisch ist bei derartigen Anschlussanordnungen unter fertigungspraktischen Gesichtspunkten der mit der beschriebenen Anschlussgeometrie verbundene Montageaufwand. Insofern erfordern die vollkommen unterschiedlich angeordneten Anschlüsse des Verdichters für Ansaug- und Ladeluft eine oftmals umständliche Führung entsprechender Rohrleitungen, wodurch sich die Stückkosten gattungsgemäßer Hubkolbenmotoren nicht unerheblich erhöhen. Die Komplexität der Leitungsverbindungen steigt zusätzlich im Fall der Verwendung gebräuchlicher Luftfilter-Ladeluftkühler-Module, welche als standardisierte Baugruppen ihrerseits eine spezifische Anschlussgeometrie aufweisen, die mit jener des Abgasturboladers in Einklang gebracht werden muss. Besonders nachteilig ist dabei, dass im Motorraum eines Fahrzeugs häufig sehr wenig Bauraum zur Verfügung steht, was die Montage, insbesondere das Anbringen der Anschlussleitungen, und gegebenenfalls eine Demontage, insbesondere das Entfernen der Anschlussleitungen, erheblich erschwert.

Derart beengte Bauraumsituationen treten allerdings nicht nur bei Turboladern auf, sondern sind bei nahezu allen Bauteilen anzutreffen, die in einem Motorraum angeordnet sind. Demnach kommen derartige Anschlussanordnungen auch bei anderen Bauteilen zur Anwendung.

DE 10 2006 061 112 A1 offenbart eine Anschlussanordnung für Fluidleitungen.

Hauptaufgabe der Erfindung ist daher die Bereitstellung einer verbesserten Ausführungsform für eine solche Anschlussanordnung, die sich insbesondere durch eine vereinfachte Montierbarkeit bzw. Demontierbarkeit gerade bei beengten Einbausituationen, wie sie z.B. in einem Motorraum typischerweise auftreten. Insbesondere wird dabei auch eine Lösung für einen Turboladern sowie für ein Verbindungselement gesucht, welche die besonders unkomplizierte Verbindung mit anderen Baugruppen, insbesondere Luftfilter und Ladeluftkühler, eines Verbrennungsmotors erlauben.

Dieses Problem wird erfindungsgemäß durch den Gegenstand des unabhängigen Anspruchs gelöst. Vorteilhafte Ausführungsformen sind Gegenstand der abhängigen Ansprüche.

Hinsichtlich der Anschlussanordnung beruht die vorliegende Erfindung auf dem allgemeinen Gedanken, die fluidische Verbindung, die zum Übertragen eines Fluids, also eines Gases oder einer Flüssigkeit, dient, durch eine axiale Steckverbindung zu realisieren, bei welcher die Anschlussleitung in einen entsprechenden, am Gehäuse des Bauteils ausgebildeten Anschluss eingesteckt wird. Die mechanische Verbindung zwischen der jeweiligen Anschlussleitung und dem Gehäuse erfolgt dagegen mittels eines Verbindungselements, das eine axiale Fixierung der Anschlussleitung am Gehäuse bewirkt. Das Verbindungselement bewirkt dabei im Wesentlichen keine radiale Fixierung zwischen Anschlussleitung und Anschluss. Die radiale Fixierung erfolgt vielmehr durch die Steckverbindung. Da außerdem vorgesehen ist, das Verbindungselement axial, also parallel zur Steckrichtung der Steckverbindung mittels wenigstens eines Befestigungselements am Gehäuse zu befestigen, vereinfacht sich die Montage bzw. die Demontage, da nur relativ wenig Montageraum erforderlich ist, um diese axialen Vorgänge durchzuführen. Das Verbindungselement ist bezüglich der jeweiligen Anschlussleitung und bezüglich des jeweiligen Anschlusses bzw. des Gehäuses ein separates Bauteil. Das jeweilige Befestigungselement kann bezüglich des Verbindungselements ein separates Bauteil sein. In diesem Fall lässt sich das Verbindungselement besonders preiswert, z.B. als Pressformteil oder dergleichen herstellen. Das Verbindungselement kann besonders preiswert hergestellt werden, da es z.B. keine radiale Verpressung zwischen der jeweiligen Anschlussleitung und dem zugehörigen Anschluss bewirken muss. Insbesondere kann daher das Verbindungselement so ausgestaltet sein, dass es die jeweilige Anschlussleitung ohne radiale Verpressung der Anschlussleitung und/oder des Anschlusses radial am Gehäuse fixiert. Hierzu kann das Verbindungselement radial lose an der jeweiligen Anschlussleitung anliegen.

Im Einzelnen schlägt die Erfindung zum mechanischen und fluidischen Verbinden wenigstens einer Anschlussleitung mit einem Anschluss vor, den jeweiligen Anschluss, der zum Zuführen eines Fluids zu einem Bauteil oder zum Abführen eines Fluids von einem Bauteil dient, an einem Gehäuse des Bauteils auszubilden, wobei die jeweilige Anschlussleitung parallel zu einer Axialrichtung in den jeweiligen Anschluss eingesteckt ist und darin mittels wenigstens einer Radialdichtung gegenüber dem jeweiligen Anschluss radial abgedichtet ist. Ferner ist die jeweilige Anschlussleitung mittels eines Verbindungselements am Gehäuse axial befestigt, wobei sich das Verbindungselement an einem Bund der jeweiligen Anschlussleitung axial abstützt und mittels wenigstens eines Befestigungselements axial am Gehäuse fixiert ist.

Entsprechend einer vorteilhaften Ausführungsform kann vorgesehen sein, dass am Gehäuse eine Befestigungskonsole ausgebildet ist, die wenigstens ein komplementär zum jeweiligen Befestigungselement ausgestaltetes Gegenbefestigungselement aufweist, das mit dem jeweiligen Befestigungselement zum axialen Fixieren des Verbindungselements am Gehäuse zusammenwirkt. Hierdurch lässt sich eine besonders feste axiale Fixierung realisieren. Gemäß einer Weiterbildung können das jeweilige Befestigungselement und das zugehörige Gegenbefestigungselement eine Schraubverbindung bilden. Das Befestigungselement ist z.B. eine Schraube mit Außengewinde und das Gegenbefestigungselement ist eine Öffnung mit einem dazu passenden Innengewinde. Ebenso ist denkbar, die Schraube an der Befestigungskonsole anzuordnen, z.B. als Bolzen oder Schweißbolzen, und am Verbindungelement ein entsprechendes Gewinde vorzusehen, z.B. mit einer passenden Mutter.

Eine verbesserte Montierbarkeit bei hoher Zuverlässigkeit ergibt sich, wenn die Befestigungskonsole axial über den jeweiligen Anschluss vorsteht.

Eine weitere Vereinfachung lässt sich erreichen, wenn der jeweilige Anschluss als Stutzen ausgestaltet ist, der axial vom Gehäuse absteht.

Eine vereinfachte Montage ergibt sich ferner, wenn das Verbindungselement einen Fixierbereich, in dem das Befestigungselement angeordnet ist, und zumindest einen bogenförmigen Haltebereich aufweist, der die jeweilige Anschlussleitung in der Umfangsrichtung klammerartig zumindest teilweise umgreift und sich daran axial abstützt.

Die Übertragung von Axialkräften wird verbessert, wenn der jeweilige Haltebereich in der Umfangsrichtung ein im Wesentlichen L-förmiges Querschnittsprofil aufweist.

Besonders vorteilhaft macht sich die vorliegende Erfindung bemerkbar, wenn das Gehäuse wenigstens zwei Anschlüsse aufweist, in die jeweils eine Anschlussleitung axial eingesteckt ist, und wenn die Anschlüsse so angeordnet sind, dass die wenigstens zwei Anschlussleitungen parallel zueinander in die Anschlüsse eingesteckt werden können. Besonders vorteilhaft ist dann, wenn die wenigstens zwei Anschlussleitungen mittels eines gemeinsamen Verbindungselements am Gehäuse axial fixiert sind.

Zweckmäßig kann vorgesehen sein, dass das Verbindungelement elastisch, insbesondere in Form einer Federklemme, und derart angeordnet ist, dass sich das Verbindungselement und die jeweilige Anschlussleitung kraftschlüssig verbinden können.

Zusätzlich oder alternativ kann vorgesehen sein, dass das Verbindungselement ein gewölbter Aufsatz derart ausgeprägter Form ist, dass sich das Verbindungselement und die jeweilige Anschlussleitung formschlüssig verbinden können.

Besonders vorteilhaft kann vorgesehen sein, dass am Gehäuse wenigstens zwei Anschlüsse ausgebildet sind und dass die in die beiden Anschlüsse eingesteckten Anschlussleitungen mittels eines gemeinsamen Verbindungselements axial am Gehäuse fixiert sind, wobei das Verbindungselement eine im Wesentlichen in einer ersten Raumebene liegende erste Rohrklammer zum Halten der einen Anschlussleitung aufweist, und wobei das Verbindungselement eine im Wesentlichen in einer zweiten Raumebene liegende zweite Rohrklammer zum Halten der anderen Anschlussleitung aufweist. Ferner kann zweckmäßig vorgesehen sein, dass sich die erste Raumebene und die zweite Raumebene parallel zueinander und senkrecht zur Axialrichtung erstrecken. Hierdurch ergibt sich eine besonders einfache Handhabung.

Gemäß einer vorteilhaften Weiterbildung kann vorgesehen sein, dass die erste Rohrklammer und/oder die zweite Rohrklammer im Wesentlichen kreisbogenförmig ausgestaltet ist/sind und einen Mittelpunktswinkel von weniger als 360° oder höchstens 180° aufweisen. Insbesondere lässt sich das Verbindungselement somit seitlich bzw. radial mit der jeweiligen Anschlussleitung verbinden, indem das Verbindungselement radial bzw. seitlich an die jeweilige Anschlussleitung angesteckt wird.

Zusätzlich oder alternativ kann vorgesehen sein, dass die erste Rohrklammer und die zweite Rohrklammer so zueinander angeordnet sind, dass die erste Raumebene und die zweite Raumebene zusammenfallen. Hierdurch baut die Anschlussanordnung besonders kompakt.

Alternativ kann dagegen vorgesehen sein, dass die erste Rohrklammer und die zweite Rohrklammer so zueinander angeordnet sind, dass die erste Raumebene und die zweite Raumebene zueinander versetzt angeordnet sind, wobei das Verbindungselement zwischen der ersten Rohrklammer und der zweiten Rohrklammer eine Stufe aufweist. Durch diese Bauform kann sich eine verbesserte Stabilität ergeben. Gleichzeitig wird dadurch mehr Gestaltungsfreiraum für die Positionierung der Anschlüsse geschaffen.

Bei einer anderen Ausführungsform kann vorgesehen sein, dass die erste Rohrklammer und/oder die zweite Rohrklammer eine erste oder radiale Anlagefläche zum radialen Anlegen an die jeweilige Anschlussleitung und eine senkrecht an die erste oder radiale Anlagefläche anschließende zweite oder axiale Auflagefläche zum axialen Auflegen auf den jeweiligen Anschluss aufweist/aufweisen. Auch dies führt zu einer kompakten Bauform.

Eine besonders vorteilhafte Ausgestaltung ergibt sich, wenn das Verbindungselement eine erste Hälfte und eine zweite Hälfte aufweist oder aus einer ersten Hälfte und einer zweiten Hälfte besteht. In diesem Fall weist die erste Hälfte eine erste Bohrung auf, während die zweite Hälfte zu der ersten Hälfte im Wesentlichen spiegelbildlich ausgestaltet ist und eine zweite Bohrung aufweist. Zweckmäßig sind die beiden Hälften so aufeinander abgestimmt, dass sich die erste Hälfte und die zweite Hälfte zum Verbindungselement zusammenfügen, wenn das Verbindungselement durch die erste Bohrung und die zweite Bohrung hindurch an dem Gehäuse befestigt ist. Hierbei lässt sich das Verbindungselement auch so ausgestalten, dass es die jeweilige Anschlussleitung um mehr als 180° umgreift.

Die Erfindung betrifft auch ein Bauteil, an dem eine Anschlussanordnung der vorstehend beschriebenen Art realisiert ist.

Grundgedanke der Erfindung ist im Hinblick auf ein mit einer derartigen Anschlussanordnung ausgestattetes Bauteil, bei dem es sich bevorzugt um einen Turbolader handeln kann, demnach, die für das Zuführen bzw. Abführen des jeweiligen Fluids vorgesehenen Anschlüsse des Bauteils axial mittels des Verbindungselements zu fixieren, wobei eine Steckverbindung zwischen der jeweiligen Anschlussleitung und dem zugehörigen Anschluss die fluidische Verbindung bewirkt. Eine radiale Fixierung der jeweiligen Anschlussleitung erfolgt durch die Steckverbindung, also direkt durch das Gehäuse, wodurch die Montage erheblich vereinfacht ist.

Sofern zumindest zwei Anschlüsse am Bauteil vorgesehen sind, die jeweils mit einer Anschlussleitung zu verbinden sind, wird vorgeschlagen, die Anschlüsse im Wesentlichen achsparallel an derselben Seite des Bauteils anzuordnen. Die Verbindungsführung innerhalb des Verbrennungsmotors wird auf diese Weise maßgeblich vereinfacht.

Nachfolgend sind bevorzugte Ausführungsformen des Bauteils anhand eines Turboladers angeführt, die jedoch auch allgemein zu verstehen und bei anderen Bauteilen realisierbar sind.

Insbesondere lassen sich die genannten Anschlüsse etwa hohlzylindrisch, vorzugsweise in Gestalt gerader Rohrstücke, ausbilden. Eine solche Anschlussgeometrie begünstigt die Konnektivität des Turboladers, da sie die Kombination der Anschlüsse mit einer Vielzahl entsprechender Anschlussleitungen erlaubt. Angesichts ihres näherungsweise kreisrunden Querschnitts und ihrer im Vergleich zur Querschnittsfläche geringen Außenoberfläche weisen derartige Anschlüsse für zahlreiche Motorkonfigurationen eine besonders vorteilhafte Bauform auf. Durch die Verwendung eines - gattungsgemäße Rohrstücke kennzeichnenden - relativ unflexiblen Werkstoffs wie Stahl, Keramik, Leichtmetall oder Kunststoff verleiht die beschriebene Ausgestaltung der Gesamtanordnung zudem eine hohe Steifigkeit. Schließlich bieten sich hinsichtlich des Herstellungsprozesses der Rohrstücke unterschiedlichste Optionen, die neben diversen Schweißverfahren beispielsweise das dem Fachmann vertraute Strangpressen, Stranggießen, Walzen sowie weitere plastische Umformtechniken umfassen. Eine Verbindung der Anschlüsse mit entsprechenden Anschlussleitungen kann bei der Verwendung geeigneter Rohrstücke etwa durch Schrauben, Löten, Schweißen, Kleben, Ineinanderschieben, Klemmen, Stecken oder Pressen erfolgen, sodass sich dem einschlägigen Fachmann unter fertigungspraktischen Gesichtspunkten eine Vielzahl möglicher Alternativen bietet. Die Interoperabilität mit anderen Motorbauteilen wird in dieser Anordnung zusätzlich gefördert, indem die hohlzylindrischen Anschlüsse bezüglich ihres Innen- oder Außenradius oder ihrer Länge weitestgehend identische Maße aufweisen.

In einer bevorzugten Ausführungsform ist zumindest einer der Anschlüsse mit einer ihn zumindest abschnittsweise umlaufenden Nut oder Dichtfuge zum Einpressen eines entsprechend geformten und dimensionierten Dichtungselements versehen. Ungewollte Stoffübergänge zwischen Turbolader und Motorraum lassen sich auf diesem Wege verhindern oder begrenzen, indem eine mit dem besagten Dichtungselement versehene Anschlussleitung mit dem Anschluss verbunden wird. Neben dem unerwünschten Austreten oder Vermischen lässt sich zugleich ein Druckabfall seitens der Ladeluftleitung vermeiden, welcher die Wirksamkeit des Turboladers in nicht unwesentlichem Maße herabzusetzen vermag. Auch seitens der Ansaugleitung kann ein Ansaugen ungefilterter Außenluft aus dem Motorraum unter Umgehung des Luftfilters durch die vorgeschlagene Abdichtung meist ausgeschlossen werden.

Ein ähnlicher Effekt wird erzielt, wenn nicht die jeweilige Anschlussleitung, sondern der Anschluss des Turboladers selbst mit dem Dichtungselement ausgestattet ist. Dieses Element, etwa in Form eines dem Fachmann geläufigen sogenannten O-Rings, mag etwa einen hierzu am Anschluss vorgesehenen Stutzen, also ein kurzes Ansatzrohrstück, umspannen und dort mit einer korrespondierenden Innenoberfläche der auf den Anschluss aufzuschiebenden Anschlussleitung zusammenwirken. Wegen der vorteilhaften industriellen Herstellbarkeit entsprechender Dichtungsringe mittels gängiger Spritzguss- oder Formpressverfahren und der großen Auswahl geeigneter Materialien - zu denken ist an verschiedenste Kautschukarten, Polyethylen (PE) oder Polytetrafluorethylen (PTFE) - offenbaren sich auch hier zahlreiche Gestaltungsvarianten zur fallspezifischen Auswahl, welche durch die Pressung des Gummikörpers beim Einbau des Turboladers eine hohe Dichtigkeit gewährleisten.

Neben dem beschriebenen Dichtungselement kann ein - lösbar oder nicht lösbar gestaltetes - Verbindungselement die Einsatzbarkeit der Anschlüsse des Turboladers weiter verbessern. In Betracht kommt insbesondere eine kraftschlüssige Verbindung, die etwa mittels eines elastischen Elements wie einer Federklemme erreicht werden kann, welche die jeweilige Anschlussleitung relativ zum ihr zugeordneten Anschluss im Wege einer durch Federkraft aufgebauten Selbsthemmung fixiert. Die vorgeschlagene elastische Ausführung des Verbindungselements ermöglicht in vielen Fällen eine nicht unbeachtliche Verkürzung der Montagezeit.

Als Alternative zur kraftschlüssigen Verbindung von Anschluss und Leitung lässt sich ein im Ergebnis gleichwertiger Formschluss durch die geeignete Formgebung beider Bauteile erreichen. Schon eine entsprechend ausgeprägte bereichsweise Auswölbung des jeweiligen Anschlusses - etwa in Gestalt eines Doms - mag dabei unter moderater Betriebsbelastung des Verbrennungsmotors die gewünschte Wirkung erzielen.

Als in besonderem Maße elegant erweist sich indes eine Ausführung des Verbindungselements, welche die gleichzeitige Verbindung des Ansauganschlusses mit einer Luftfilteranschlussleitung einerseits und des Ladeanschlusses mit einer Ladeluftkühleranschlussleitung andererseits gestattet. Ein derartiges Verbindungselement lässt sich durch die steife Verbindung zweier im Wesentlichen planparallel angeordneter Rohrschellen realisieren, wobei jede Rohschelle zum Halten der ihr zugeordneten Anschlussleitung dient. Als denkbare Alternative zu einer im Wesentlichen flachen Formgebung erlaubt dabei die Verbindung dieser Rohrschellen mittels einer zwischen Letzteren angeordneten Stufe sogar eine Verwendung des Verbindungselements für unterschiedlich lange Anschlüsse des Turboladers.

Um nicht lediglich die Anschlussleitungen untereinander, sondern zugleich beide Anschlussleitungen formschlüssig und lösbar mit dem Turbolader verbinden zu können, empfiehlt es sich, das Verbindungselement mit einer geeigneten Bohrung zu versehen, die annähernd senkrecht zu den Rohrschellen orientiert sein sollte, um eine stabile Verschraubung von Verbindungselement und Turbolader zu ermöglichen. Dem Monteur eröffnet eine derartige Bohrung eine beträchtliche Auswahl entsprechender Schraubgetriebe und Werkzeuge zur Herstellung einer Verbindung, die im Betrieb des Verbrennungsmotors auftretenden Belastungen standhält.

Eine vereinfachte Fertigung und flexible Einsatzmöglichkeiten ergeben sich in diesem Fall, wenn das Verbindungselement in Gestalt zweier im Wesentlichen spiegelbildlich geformter Hälften ausgeführt wird. Im Rahmen der Montage kann jede Hälfte dabei einzeln im vorgesehenen Abstand von ihrem Pendant mittels einer die Hälfte durchlaufenden Bohrung mit dem Turbolader verschraubt werden. Vorzuziehen ist gleichwohl eine Ausgestaltung beider Hälften in der Weise, dass deren korrespondierende Bohrungen im Zuge der Anbringung in Deckung gebracht werden können, um eine durchgehende Bohrung zu bilden. Nunmehr kann eine einzige Schraube nicht nur beide Hälften mit dem Turbolader verbinden, sondern zugleich die relative Position beider Hälften fixieren, sodass diese sich gleichsam zu einem integralen Verbindungselement zusammenfügen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: die Ansicht eines Abgasturboladers gemäß einer ersten Ausführungsform der Erfindung,
- Fig. 2a: die Verwendung eines Verbindungselements gemäß einer zweiten Ausführungsform der Erfindung zur Verbindung zweier Anschlussleitungen,
- Fig. 2b: eine Detailansicht des Verbindungselements gemäß der zweiten Ausführungsform,
- Fig. 3a: die Verwendung eines Verbindungselements gemäß einer dritten Ausführungsform der Erfindung zur Verbindung der Anschlussleitungen,
- Fig. 3b: drei Detailansichten des Verbindungselements gemäß der dritten Ausführungsform,
- Fig. 4a: die Ansicht eines Verbindungselements gemäß einer vierten Ausführungsform in einem Zustand vor der Montage und
- Fig. 4b: eine Ansicht des zusammengefügten Verbindungselements gemäß der vierten Ausführungsform,
- Fig. 5: ein Axialschnitt des Turboladers im Bereich einer Anschlussanordnung,
- Fig. 6a: eine Axialansicht eines Verbindungselements gemäß eine rfünften Ausführungsform,
- Fig. 6b: eine isometrische Ansicht des Verbindungselements der fünften Ausführungsform.

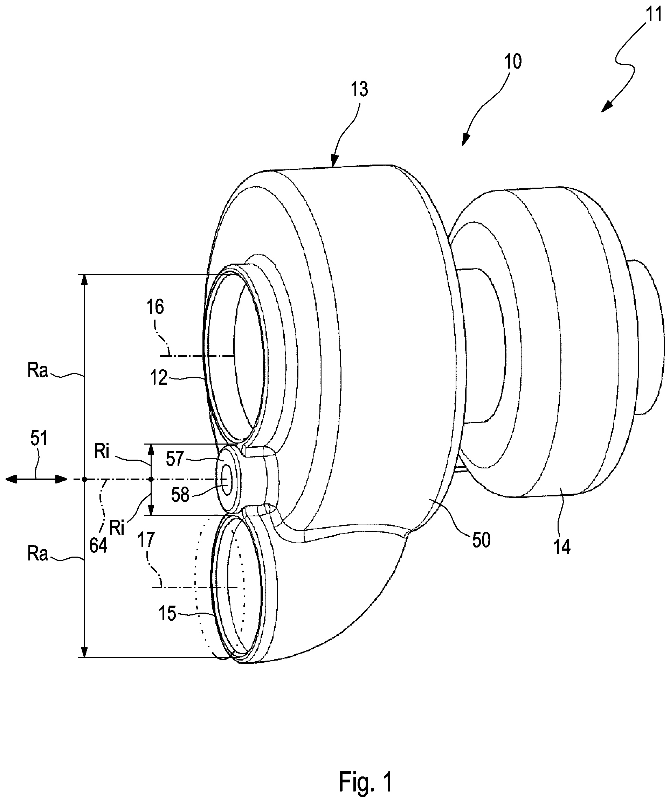

Figur 1 illustriert in einer perspektivischen Darstellung einen Turbolader 10 in Gestalt eines Abgasturboladers für einen - beispielsweise als Hubkolbenmotor ausgeführten - Verbrennungsmotor 11. Als Verbrennungsmotor ist im vorliegenden Zusammenhang jegliche Verbrennungskraftmaschine zu verstehen, die chemische Energie eines Kraftstoffs durch Verbrennung in mechanische Arbeit umwandelt. Zum Ansaugen des hierzu benötigten Sauerstoffs, welcher in der Regel aus der Umgebungsluft des Verbrennungsmotors 11 entnommen werden kann, besitzt der Turbolader 10 einen Ansauganschluss 12 in der Gestalt eines geraden, als Stutzen ausgebildeten Rohrstücks kreisrunden Querschnitts.

Der Ansauganschluss 12 dient in dieser Anordnung als Eingangsöffnung eines im Wesentlichen zylinderförmigen Verdichters 13. Unter diesen Begriff werden vorliegend sämtliche thermischen Turboarbeitsmaschinen gefasst, welche - in der Umkehrung des Prinzips einer Turbine - das durch den Ansauganschluss 12 zugeführte gasförmige Medium durch Übertragung kinetischer Energie insbesondere im Wege eines Drallimpulses fördern und zugleich verdichten. Der Verdichter 13 umfasst zu diesem Zweck ein ausreichend dimensioniertes Gehäuse 50, welches geeignete, in Figur 1 nicht dargestellte Leiteinrichtungen sowie eine Antriebswelle mit mindestens einem Laufrad mit Leitschaufeln oder einer unmittelbar auf der Welle angeordneten Leitschaufelreihe beherbergt.

Im Bereich ihres dem Verdichter 13 abgewandten Endes ist auf der Antriebswelle eine Antriebsmaschine 14 in Form einer geeigneten Turbine montiert, welche durch einen Strom vom Verbrennungsraum des Verbrennungsmotors 11 zugeleiteter Verbrennungsabgase in Rotation versetzt werden kann und ihr Drehmoment über die Antriebswelle auf das Verdichterrad des Verdichters 13 zu übertragen vermag. Der Verdichter 13 nutzt die auf diese Weise aus dem Restdruck der Verbrennungsabgase bezogene Energie zur Druckerhöhung des durch ihn geförderten Gasgemischs. Das derart komprimierte Medium kann über einen im Folgenden als Ladeanschluss 15 bezeichneten Ausgang des Turboladers 10 entweichen und mindestens einem Zylinder des Verbrennungsmotors 11 zugeführt werden, dessen Arbeitsdruck auf diesem Weg beträchtlich erhöht werden kann. Ggf. kann die Ladeluft über diverse Zwischenkomponenten, insbesondere einen Ladeluftkühler, geleitet werden.

Wie schon der Ansauganschluss 12 ist dabei auch der Ladeanschluss 15 als gerader Stutzen ausgebildet und achsparallel an derselben Seite des Turboladers 10 angeordnet. Eine Längsmittelachse des Ansauganschlusses 12 bzw. des zugehörigen Stutzens ist dabei in Fig. 1 mit 16 bezeichnet, während eine Längsmittelachse des Ladeanschlusses 15 bzw. des zugehörigen Stutzens mit 17 bezeichnet ist. Erkennbar erstrecken sich die beiden Längsmittelachsen 16, 17 parallel zueinander.

Bei nahezu gleicher Länge und Wandstärke weist der Ladeanschluss 15 einen gegenüber dem Ansauganschluss 12 geringeren Durchmesser auf. Der Ladeanschluss 15 und der Ansauganschluss 12 enden bei der dargestellten Ausführung in der gleichen Ebene. Bei anderen Ausgestaltungen des Turboladers 10 enden die Anschlüsse 12, 15 in unterschiedlichen Ebenen. Eine derartige Ausgestaltung ist mit der strich-zwei-punktierten Linie im Bereich des Ladeanschlusses angedeutet. Dieser strich-zwei-punktierte Ladeanschluss 15 besitzt eine größere Länge, als der Ansauganschluss 12. Je nach Ausführung können die Längen der Anschlüsse 12, 15 gleich oder unterschiedlich sein. Bei gleichen Längen der Anschlüsse 12, 15, welche in der gleichen axialen Ebene beginnen, enden die Anschlüsse in der gleichen Ebene. Bei anderen Ausgestaltungen können die Anschlüsse in unterschiedlichen Ebenen beginnen. Bei gleich langen Anschlüssen 12, 15 enden die Anschlüsse 12, 15 bei dieser Ausgestaltung in unterschiedlichen Ebenen. Anschlüsse, die in der gleichen Ebene beginnen, jedoch unterschiedliche Längen aufweisen, enden somit auch in unterschiedlichen Ebenen.

Die beiden Anschlüsse 12, 15 besitzen von der zentral angeordneten Bohrung 58 denselben Abstand. Ferner liegen eine Längsmittelachse 64 der Bohrung 58 und die beiden Längsmittelachsen 16, 17 der Anschlüsse 12, 15 hier in einer gemeinsamen Ebene. Beide Anschlüsse 12, 15 besitzen an einem der Bohrung 58 zugewandten proximalen Umfangsabschnitt von der Längsmittelachse 64 der Bohrung 58 einen Innenabstand Ri, während sie an einem von der Bohrung 58 abgewandten distalen Umfangsabschnitt von der Längsmittelachse 64 der Bohrung 58 einen Außenabstand Ra besitzen. Die beiden Innenabstände Ri sind dabei gleich groß. Die beiden Außenabstände Ra sind aufgrund der verschiedenen Durchmesser der Anschlüsse 12, 15, die sich jeweils aus der Differenz von Ra und Ri ergeben, verschieden groß.

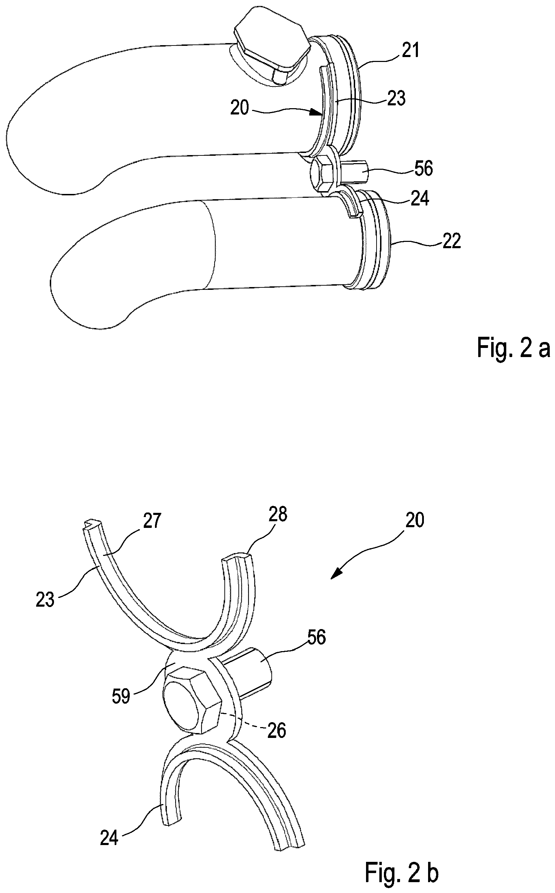

Die Figuren 2a und 2b zeigen ein Verbindungselement 20 gemäß einer zweiten erfindungsgemäßen Ausführungsform. Dieses Verbindungselement 20 lässt sich in vorteilhafter Weise nutzen, um zwei - z.B. in Figur 2a dargestellte - Rohrleitungen 21, 22 mit dem beschriebenen Turbolader 10 zu verbinden. Im Einzelnen handelt es sich dabei um eine Luftfilteranschlussleitung 21 und eine geringfügig dünnere Ladeluftkühleranschlussleitung 22, wie sie zum Aufbau einer Fluidverbindung des Turboladers 10 mit einer Luftfilter-Ladeluftkühler-Baugruppe des Verbrennungsmotors 11 Anwendung fänden. Die Anschlussleitungen 21, 22 mögen dabei weitere - in Figur 2a nicht gezeigte - Rohre, Rohrformteile, Ausdehnungsstücke, Armaturen, Dichtungen, Flansche, Fittings, Verschraubungen, Muffen und andere Verbindungs- oder Befestigungselemente umfassen, solange Letztere einer Kombination mit dem erfindungsgemäßen Verbindungselement 20 nicht entgegenstehen.

Wie Figur 2b im Einzelnen erkennen lässt, setzt sich das Verbindungselement 20 aus einer ersten Rohrklammer 23 und einer dieser gegenüber versteiften zweiten Rohrklammer 24 zusammen, wobei als Rohrklammer in diesem Kontext jedes zur Halterung der Luftfilteranschlussleitung 21 oder der Ladeluftkühleranschlussleitung 22 geeignet erscheinende Bauteil zu verstehen ist. Die Rohrklammern 23 und 24 sind im Fall der Figuren 2a und 2b dabei in etwa kreisbogenförmig mit einem Mittelpunktswinkel von 180° ausgeführt, was ihnen die Gestalt zweier Halbkreise mit im Wesentlichen parallelen Kreissehnen verleiht. Zum Zwecke der Versteifung in einer dem Abstand der Anschlüsse 12, 15 des Turboladers 10 entsprechenden Konfiguration sind beide Rohrklammern 23, 24 in einer gemeinsamen Raumebene X-förmig integral an ein kreisrundes Mittelstück 59 angeformt, welches von einer senkrechten, annähernd zentralen Bohrung 26 durchzogen wird. Wie die Figuren 2a und 2b illustrieren, lässt sich diese Bohrung 26 vorteilhaft zur Durchführung einer Schraube 56 nutzen, die mit einer entsprechenden Mutter oder Gewindebohrung 58 des Turboladers 10 zur Herstellung einer lösbaren Verbindung zusammenwirken kann und zu diesem Zweck im gegebenen Beispiel mit einem als Außensechskant profilierten Schraubenkopfantrieb zum Eingriff geeigneten Werkzeugs versehen ist. Die jeweilige Rohrklammer 23, 24 besitzt ein L-förmiges Querschnittsprofil und weist dementsprechend einen bogenförmigen Bord 28 und einen davon abgewickelten bogenförmigen Kragen 27 auf, der den Bord 28 aussteift.

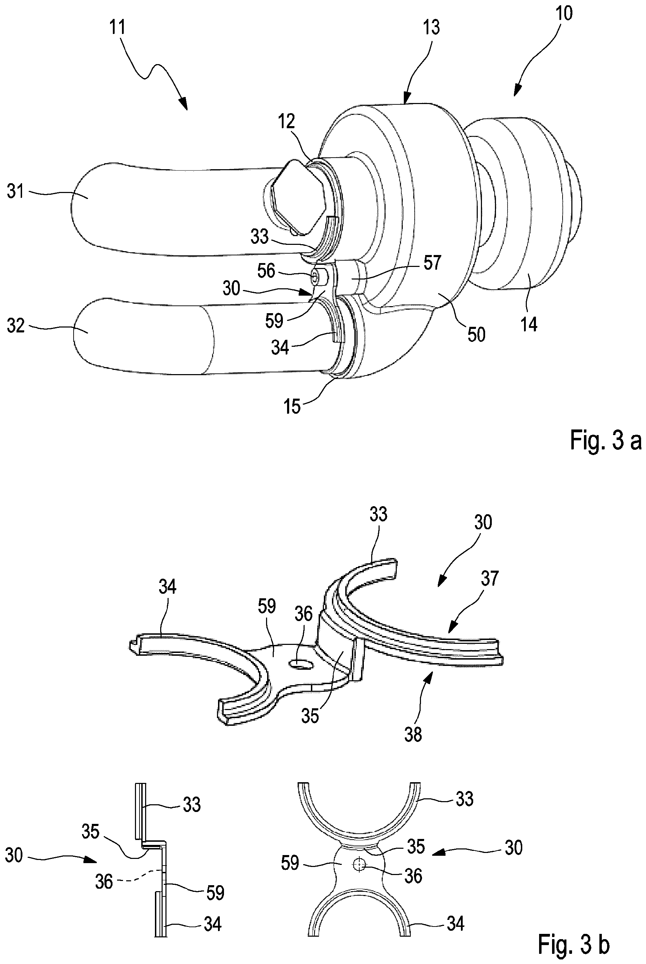

Die Figuren 3a und 3b zeigen ein ähnliches Verbindungselement 30 - im Falle der Figur 3a in Kombination mit korrespondierenden Anschlussleitungen 31, 32 -, welches sich vom Verbindungselement 20 der Figuren 2a und 2b vor allem in der relativen Position seiner Rohrklammern 33, 34 unterscheidet. So ist die zweite Rohrklammer 34 des Verbindungselements 30 nicht koplanar, sondern versetzt zu dessen erster Rohrklammer 33 angeordnet, sodass sie der - in Figur 3a erkennbaren - größeren Länge des mit der Luftfilteranschlussleitung 31 zu verbindenden Luftfilteranschlusses Rechnung trägt. Dieser Versatz wird mittels einer zwischen den Rohrschellen 33, 34 geformten Stufe 35 des Verbindungselements 30 realisiert. Die Stufe 35 dient somit der Überbrückung der in versetzten Ebenen endenden Anschlüsse 12, 15. Bei anderen Ausgestaltungen kann die Stufe 35 auch in die entgegengesetzte Richtung weisen. Ereknnbar weist auch hier die jeweilige Rohrklammer 33, 34 einen Bord 38 in Form eines 180°-Bogens und einen davon rechtwincklig abstehenden, am Innenrand angeordneten Kragen 37 auf, wodurch sich eine intensive Aussteifung sowie ein L-förmiges Profil ergeben.

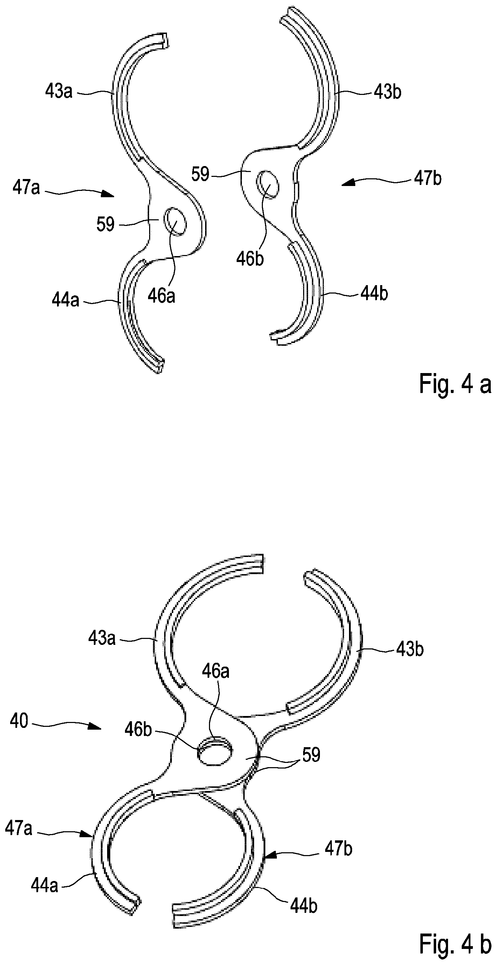

Die Figuren 4a und 4b illustrieren indes eine grundsätzlich abweichende Konstruktionsmöglichkeit für ein Verbindungselement 40, welches sich aus einer ersten Hälfte 47a und einer weitgehend spiegelbildlichen zweiten Hälfte 47b (siehe Figur 4a) zusammenfügen lässt. Dabei ist die erste Hälfte 47a mit einer ersten Bohrung 46a und die zweite Hälfte 47b mit einer zweiten Bohrung 46b versehen, die im Zuge der Montage des Verbindungselements 40 durch Übereinanderlegen der entsprechenden Mittelteile beider Hälften 47a, 47b in Deckung gebracht werden können, um - den Szenarien der Figuren 2a, 2b und 3a entsprechend - die Durchführung einer Schraube 56 zu ermöglichen.

In dem in Figur 4b dargestellten zusammengefügten Zustand des Verbindungselements 40, in welchem die erste Bohrung 46a und die zweite Bohrung 46b nunmehr eine einzige, den Bohrungen 26, 36 entsprechende durchgehende Bohrung darstellen, ergibt sich hier folgendes Bild: Ein erster Schenkel 43a der ersten Hälfte 47a, welcher in der Geometrie eines Kreisbogens mit einem Mittelpunktswinkel von weniger als 180° gestaltet ist, fügt sich mit einem korrespondierenden ersten Schenkel 43b der zweiten Hälfte 47b zu einer nunmehr zweiteiligen ersten Rohrklammer 43a, 43b, die dem Außendurchmesser der Luftfilteranschlussleitung 21, 31 angepasst ist. Analog fungieren die spiegelbildlich angeordneten zweiten Schenkel 44a, 44b der Hälften 47a, 47b als zweite Rohrklammer 44a, 44b, welche die - geringfügig dünner bemessene - Ladeluftkühleranschlussleitung 22, 32 aufnehmen kann.

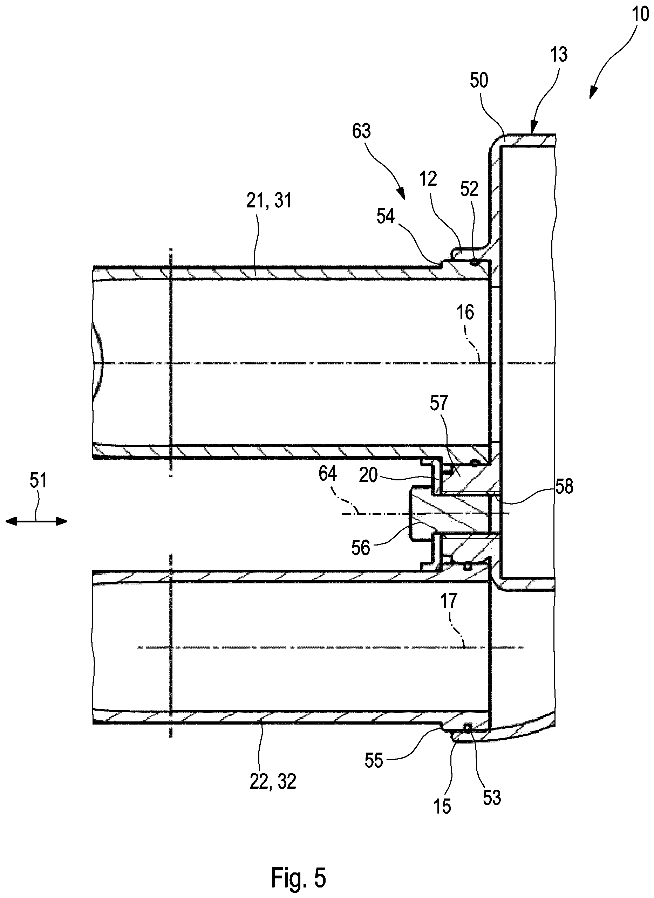

Der Turbolader 10 bzw. dessen Verdichter 13 repräsentiert hier somit ein Bauteil, an dem gemäß Fig. 5 eine Anschlussanordnung 63 realisiert ist. Diese Anschlussanordnung 63 dient an besagtem Bauteil 10 bzw. 13 zum mechanischen und fluidischen Verbinden wenigstens einer Anschlussleitung mit einem zugehörigen Anschluss. Die Anschlüsse sind die beiden zuvor genannten Anschlüsse 12 und 15, nämlich der Ansauganschluss 12 und der Ladeanschluss 15. Demnach dient der jeweilige Anschluss 12, 15 zum Zuführen eines Fluids zum Bauteil 13 oder zum Abführen eines Fluids vom Bauteil 13 und ist zu diesem Zweck am Gehäuse 50 des Bauteils 13 ausgebildet. Die zugehörigen Anschlussleitungen sind durch die in den Fig. 2 und 3 bereits gezeigten Luftfilteranschlussleitungen 21, 31 und die Ladeluftkühleranschlussleitungen 22, 32 gebildet. Gemäß Fig. 5 ist demnach die jeweilige Anschlussleitung 21, 22, 31, 32 parallel zu einer Axialrichtung 51 in den jeweiligen Anschluss 12, 15 eingesteckt ist und darin mittels wenigstens einer Radialdichtung 52, 53 gegenüber dem jeweiligen Anschluss 12, 15 radial abgedichtet.

Die Radialdichtung 52, 53 ist dabei zweckmäßig ein O-Ring, der in eine radial außenliegende Umfangsnut der jeweiligen Anschlussleitung 21, 22, 31, 32 eingelegt ist und/oder der in eine radial innenliegende Umfangsnut des jeweiligen Anschlusses 12, 15 eingelegt ist. Die jeweilige Anschlussleitung 21, 22, 31, 32 ist mittels des in den Fig. 2a und 2b gezeigten Verbindungselements 20 am Gehäuse 50 axial befestigt. Dabei stützt sich das Verbindungselement 20 an einem Bund 54, 55 der jeweiligen Anschlussleitung 21, 22, 31, 32 axial ab und ist mittels wenigstens eines Befestigungselements, nämlich mit der Schraube 56, axial am Gehäuse 50 fixiert ist.

Am Gehäuse 50 ist eine Befestigungskonsole 57 ausgebildet, die wenigstens ein komplementär zum jeweiligen Befestigungselement 56 ausgestaltetes Gegenbefestigungselement 58 aufweist, das mit dem jeweiligen Befestigungselement 56 zum axialen Fixieren des Verbindungselements 20 am Gehäuse 50 zusammenwirkt. Im gezeigten Beispiel bilden das jeweilige Befestigungselement 56 und das zugehörige Gegenbefestigungselement 58 eine Schraubverbindung. Demnach handelt es sich beim Gegenbefestigungselement hier um eine Schrauböffnung 58, die ein zum Außengewinde der Schraube 56 komplementäres Innengewinde aufweist.

Erkennbar ist in Fig. 5 die Befestigungskonsole 57 so gestaltet, dass sie axial über den jeweiligen Anschluss 12, 15 vorsteht. Ferner ist hier erkennbar, dass der jeweilige Anschluss 12, 15 als Stutzen ausgestaltet ist, der axial vom Gehäuse 50 absteht.

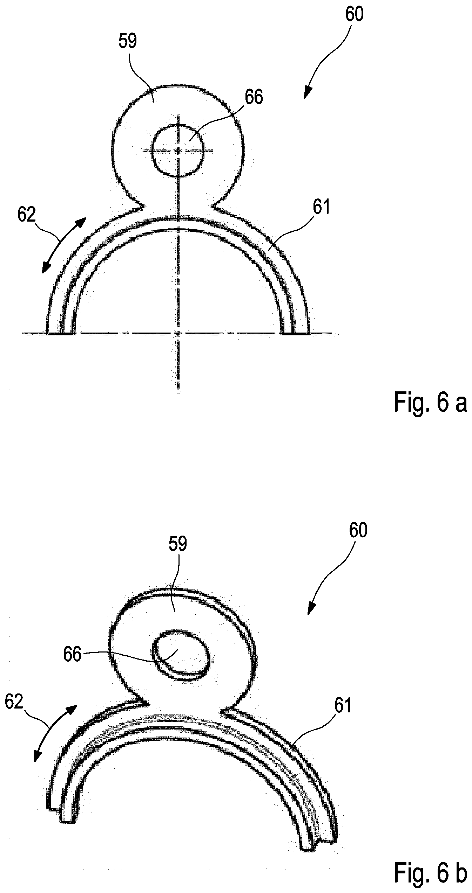

Gemäß den Fig. 6a und 6b kann das Verbindungselement 60 gemäß einer fünften Ausführungsform so ausgestaltet sein, das damit nur eine Anschlussleitung 21, 22, 31, 32 am Gehäuse 50 fixieren lässt. Die anderen Ausführungsformen der Fig. 2a, 2b, 3a, 3b, 4a und 4b sind dagegen so ausgestaltet, dass damit genau zwei Anschlussleitungen 21, 22, 31, 32 am Gehäuse 50 fixierbar sind.

Die nachfolgenden Ausführungen anhand der Fig. 6a und 6b zur fünften Ausführungsform sind allerdings entsprechend auf die anderen Ausführungsformen der anderen Figuren übertragbar. Das jeweilige Verbindungselement 60 und insbesondere auch 20, 30, 40 weist einen Fixierbereich 59, in dem das Befestigungselement 56 angeordnet werden kann, und zumindest einen bogenförmigen Haltebereich 61 auf, der die jeweilige Anschlussleitung 21, 22, 31, 32 in der Umfangsrichtung 62 klammerartig zumindest teilweise umgreift. Auch erfolgt im jeweiligen Haltebereich 61 die axiale Abstützung am Bund 54, 55 der jeweiligen Anschlussleitung 21, 22, 31, 32. Eine verbesserte Steifigkeit ergibt sich, wenn der jeweilige Haltebereich 61 in der Umfangsrichtung 62 ein im Wesentlichen L-förmiges Querschnittsprofil aufweist. Dieses L-förmige Querschnittsprofil ist auch in Fig. 5 gut erkennbar. Wie mit Bezug auf die Fig. 2 und 3 bereits erläutert besitzt die jeweilige Rohrklammer 23, 24, 33, 34 hierzu einen Bund 28, 38 und einen davon innen abstehenden Kragen 27, 37. Die Bohrung zum Durchführen der Schraube 56 ist dabei mit 66 bezeichnet.

Sofern, wie in Fig 1 und 5 vorgesehen, das Gehäuse 50 wenigstens zwei Anschlüsse 12, 15 aufweist, in die jeweils eine Anschlussleitung 21, 22, 31, 32 axial eingesteckt ist, sind die wenigstens zwei Anschlussleitungen 21, 22, 31, 32 parallel zueinander in die Anschlüsse 12, 15 eingesteckt, wobei die wenigstens zwei Anschlussleitungen 21, 22, 31, 32 mittels eines gemeinsamen Verbindungselements 20, 30, 40 am Gehäuse 50 axial fixiert sind.

## Patentansprüche

1. Anschlussanordnung zum mechanischen und fluidischen Verbinden wenigstens einer Anschlussleitung (21, 22, 31, 32) mit einem Anschluss (12, 15),
- wobei der jeweilige Anschluss (12, 15) zum Zuführen eines Fluids zu einem Bauteil (13) oder zum Abführen eines Fluids von einem Bauteil (13) dient und an einem Gehäuse (50) des Bauteils (13) ausgebildet ist,
- wobei die jeweilige Anschlussleitung (21, 22, 31, 32) parallel zu einer Axialrichtung (51) in den jeweiligen Anschluss (12, 15) eingesteckt ist und darin mittels wenigstens einer Radialdichtung (52, 53) gegenüber dem jeweiligen Anschluss (12, 15) radial abgedichtet ist,
- wobei die jeweilige Anschlussleitung (21, 22, 31, 32) mittels eines Verbindungselements (20, 30, 40, 60) am Gehäuse (50) axial befestigt ist,
- wobei sich das Verbindungselement (20, 30, 40, 60) an einem Bund (54, 55) der jeweiligen Anschlussleitung (21, 22, 31, 32) axial abstützt und mittels wenigstens eines Befestigungselements (56) axial am Gehäuse (50) fixiert ist
- wobei am Gehäuse (50) wenigstens zwei Anschlüsse (12, 15) ausgebildet sind,
- wobei die in die beiden Anschlüsse (12, 15) eingesteckten Anschlussleitungen (21, 22, 31, 32) mittels eines gemeinsamen Verbindungselements (20, 30, 40, 60) axial am Gehäuse (50) fixiert sind,
- wobei das Verbindungselement (20, 30, 40, 60) eine im Wesentlichen in einer ersten Raumebene liegende erste Rohrklammer (23, 33, 43a, 43b) zum Halten der einen Anschlussleitung (21, 31) aufweist,
- wobei das Verbindungselement (20, 30, 40, 60) eine im Wesentlichen in einer zweiten Raumebene liegende zweite Rohrklammer (24, 34, 44a, 44b) zum Halten der anderen Anschlussleitung (22, 32) aufweist,
- wobei sich die erste Raumebene und die zweite Raumebene parallel zueinander und senkrecht zur Axialrichtung (51) erstrecken,
**dadurch gekennzeichnet,**
- **dass** die erste Rohrklammer (23, 33, 43a, 43b) und die zweite Rohrklammer (24, 34, 44a, 44b) so zueinander angeordnet sind, dass die erste Raumebene und die zweite Raumebene zueinander versetzt angeordnet sind, wobei das Verbindungselement (30) zwischen der ersten Rohrklammer (23, 33, 43a, 43b) und der zweiten Rohrklammer (24, 34, 44a, 44b) eine Stufe (35) aufweist.

2. Anschlussanordnung nach Anspruch 1,
**dadurch gekennzeichnet,**
**dass** am Gehäuse (50) eine Befestigungskonsole (57) ausgebildet ist, die wenigstens ein komplementär zum jeweiligen Befestigungselement (56) ausgestaltetes Gegenbefestigungselement (58) aufweist, das mit dem jeweiligen Befestigungselement (56) zum axialen Fixieren des Verbindungselements (20, 30, 40, 60) am Gehäuse (50) zusammenwirkt.

3. Anschlussanordnung nach Anspruch 2,
**dadurch gekennzeichnet,**
**dass** das jeweilige Befestigungselement (56) und das zugehörige Gegenbefestigungselement (58) eine Schraubverbindung bilden.

4. Anschlussanordnung nach Anspruch 2 oder 3,
**dadurch gekennzeichnet,**
**dass** die Befestigungskonsole (57) axial über den jeweiligen Anschluss (12, 15) vorsteht.

5. Anschlussanordnung nach einem der Ansprüche 1 bis 4,
**dadurch gekennzeichnet,**
**dass** der jeweilige Anschluss (12, 15) als Stutzen ausgestaltet ist, der axial vom Gehäuse (50) absteht.

6. Anschlussanordnung nach einem der Ansprüche 1 bis 5,
**dadurch gekennzeichnet,**
**dass** das Verbindungselement (20, 30, 40, 60) einen Fixierbereich (59), in dem das Befestigungselement (56) angeordnet ist, und zumindest einen bogenförmigen Haltebereich (61) aufweist, der die jeweilige Anschlussleitung (21, 22, 31, 32) in der Umfangsrichtung (62) klammerartig zumindest teilweise umgreift und sich daran axial abstützt.

7. Anschlussanordnung nach Anspruch 6,
**dadurch gekennzeichnet,**
**dass** der jeweilige Haltebereich (61) in der Umfangsrichtung (62) ein im Wesentlichen L-förmiges Querschnittsprofil aufweist.

8. Anschlussanordnung nach einem der Ansprüche 1 bis 7,
**dadurch gekennzeichnet,**
- **dass** das Gehäuse (50) wenigstens zwei Anschlüsse (12, 15) aufweist, in die jeweils eine Anschlussleitung (21, 22, 31, 32) axial eingesteckt ist,
**dass** die wenigstens zwei Anschlussleitungen (21, 22, 31, 32) parallel zueinander in die Anschlüsse (12, 15) eingesteckt sind,
**dass** die wenigstens zwei Anschlussleitungen (21, 22, 31, 32) mittels eines gemeinsamen Verbindungselements (20, 30, 40) am Gehäuse (50) axial fixiert sind.

9. Anschlussanordnung nach einem der Ansprüche 1 bis 8,
**dadurch gekennzeichnet,**
**dass** das Verbindungelement (20, 30, 40, 60) elastisch, insbesondere eine Federklemme, und derart angeordnet ist, dass sich das Verbindungselement (20, 30, 40, 60) und die jeweilige Anschlussleitung (21, 22, 31, 32) kraftschlüssig verbinden können.

10. Anschlussanordnung nach einem der Ansprüche 1 bis 9,
**dadurch gekennzeichnet,**
**dass** das Verbindungselement (20, 30, 40) ein gewölbter Aufsatz derart ausgeprägter Form ist, dass sich das Verbindungselement (20, 30, 40) und die jeweilige Anschlussleitung (21, 22, 31, 32) formschlüssig verbinden können.

11. Anschlussanordnung nach einem der Ansprüche 1 bis 10,
**dadurch gekennzeichnet,**
**dass** die erste Rohrklammer (23, 33, 43a, 43b) und/oder die zweite Rohrklammer (24, 34, 44a, 44b) im Wesentlichen kreisbogenförmig ausgestaltet ist/sind und einen Mittelpunktswinkel von weniger als 360° oder höchstens 180° aufweisen.

12. Anschlussanordnung nach einem der Ansprüche 1 bis 11,
**dadurch gekennzeichnet,**
**dass** die erste Rohrklammer (23, 33, 43a, 43b) und die zweite Rohrklammer (24, 34, 44a, 44b) so zueinander angeordnet sind, dass die erste Raumebene und die zweite Raumebene zusammenfallen.

13. Anschlussanordnung nach einem der Ansprüche 1 bis 12,
**dadurch gekennzeichnet,**
- **dass** das Verbindungselement (40) eine erste Hälfte (47a) und eine zweite Hälfte (47b) aufweist oder aus einer ersten Hälfte (47a) und einer zweiten Hälfte (47b) besteht,
- **dass** die erste Hälfte (47a) eine erste Bohrung (46a) aufweist,
- **dass** die zweite Hälfte (47b) zu der ersten Hälfte (47a) im Wesentlichen spiegelbildlich ausgestaltet ist und eine zweite Bohrung (46b) aufweist,
- **dass** sich die erste Hälfte (47a) und die zweite Hälfte (47b) zum Verbindungselement (40) zusammenfügen, wenn das Verbindungselement (40) durch die erste Bohrung (46a) und die zweite Bohrung (46b) hindurch an dem Gehäuse (50) befestigt ist.

## Claims

1. Connector assembly for mechanical and fluid connection of at least one connection line (21, 22, 31, 32) comprising a connection (12, 15),
- wherein the respective connection (12, 15) serves for supplying a fluid to a component (13) or for discharging a fluid from a component (13) and is formed on a housing (50) of the component (13),
- wherein the respective connection line (21, 22, 31, 32) is inserted into the respective connection (12, 15) parallel to an axial direction (51) and is radially sealed therein with respect to the respective connection (12, 15) by means of at least one radial seal (52, 53),
- wherein the respective connection line (21, 22, 31, 32) is axially attached to the housing (50) by means of a connecting element (20, 30, 40, 60),
- wherein the connecting element (20, 30, 40, 60) is axially supported on a collar (54, 55) of the respective connection line (21, 22, 31, 32) and axially fixed on the housing (50) by means of at least one attachment element (56),
- wherein at least two connections (12,15) are formed on the housing (50),
- wherein the connection lines (21, 22, 31, 32) inserted in the two connections (12, 15) are axially fixed on the housing (50) by means of a common connecting element (20, 30, 40, 60),
- wherein the connecting element (20, 30, 40, 60) comprises a first pipe clamp (23, 33, 43a, 43b) lying substantially in a first spatial plane, for holding the one connection line (21, 31),
- wherein the connecting element (20, 30, 40, 60) comprises a second pipe clamp (24, 34, 44a, 44b) lying substantially in a second spatial plane, for holding the other connection line (22, 32),
- wherein the first spatial plane and the second spatial plane extend parallel to one another and perpendicular to the axial direction (51),
**characterised in that**
- the first pipe clamp (23, 33, 43a, 43b) and the second pipe clamp (24, 34, 44a, 44b) are arranged with respect to each other in such a way that the first spatial plane and the second spatial plane are arranged offset from one another, wherein the connecting element (30) comprises a step (35) between the first pipe clamp (23, 33, 43a, 43b) and the second pipe clamp (24, 34, 44a, 44b).

2. Connector assembly according to claim 1,
**characterised in that**
an attachment bracket (57) is formed on the housing (50), which comprises at least one mating attachment element (58) designed to be complementary to the respective attachment element (56), which engages with the respective attachment element (56) in order to axially fix the connecting element (20, 30, 40, 60) on the housing (50).

3. Connector assembly according to claim 2,
**characterised in that**
the respective attachment element (56) and the associated mating attachment element (58) form a screw connection.

4. Connector assembly according to claim 2 or 3,
**characterised in that**
the attachment bracket (57) projects axially over the respective connection (12, 15).

5. Connector assembly according to one of claims 1 to 4,
**characterised in that**
each connection (12, 15) is designed as a joint that protrudes axially from the housing (50).

6. Connector assembly according to one of claims 1 to 5,
**characterised in that**
the connecting element (20, 30, 40, 60) comprises a fixing region (59), in which the attachment element (56) is arranged, and at least one curved holding region (61) which engages, at least in sections, over the respective connection line (21, 22, 31, 32) in the peripheral direction (62) in the manner of a clamp, and axially supports itself thereon.

7. Connector assembly according to claim 6,
**characterised in that**
the respective holding region (61) has a substantially L-shaped cross-sectional profile in the peripheral direction (62).

8. Connector assembly according to one of claims 1 to 7,
**characterised in that**
- the housing (50) comprises at least two connections (12, 15), into each of which a connection line (21, 22, 31, 32) is axially inserted,
that the at least two connection lines (21, 22, 31, 32) are inserted into the connections (12, 15) parallel to one another,
that the at least two connection lines (21, 22, 31, 32) are axially fixed to the housing (50) by means of a common connecting element (20, 30, 40).

9. Connector assembly according to one of claims 1 to 8,
**characterised in that**
the connecting element (20, 30, 40, 60) is resilient, in particular a spring clamp, and is arranged such that the connecting element (20, 30, 40, 60) and the respective connection line (21, 22, 31, 32) can connect in a force-fit manner.

10. Connector assembly according to one of claims 1 to 9,
**characterised in that**
the connecting element (20, 30, 40) has a curved attachment shape formed such that the connecting element (20, 30, 40) and the respective connection line (21, 22, 31, 32) can connect in a form-fitting manner.

11. Connector assembly according to one of claims 1 to 10,
**characterised in that**
the first pipe clamp (23, 33, 43a, 43b) and/or the second pipe clamp (24, 34, 44a, 44b) are/is substantially formed in the shape of a circular arc and has a centre angle of less than 360° or at most 180°.

12. Connector assembly according to one of claims 1 to 11,
**characterised in that**
the first pipe clamp (23, 33, 43a, 43b) and the second pipe clamp (24, 34, 44a, 44b) are arranged with respect to each other such that the first spatial plane and the second spatial plane coincide.

13. Connector assembly according to one of claims 1 to 12,
**characterised in that**
- the connecting element (40) comprises a first half (47a) and a second-half (47b) or consists of a first half (47a) and a second half (47b),
- the first half (47a) comprises a first bore (46a),
- the second half (47b) is designed substantially as a mirror image of the first half (47a) and comprises a second bore (46b),
- the first half (47a) and the second half (47b) join together to form the connecting element (40), if the connecting element (40) is attached to the housing (50) through the first bore (46a) and the second bore (46b).

## Revendications

1. Agencement de raccordement pour raccorder au plan mécanique et fluidique au moins une conduite de raccordement (21, 22, 31, 32) à un raccord (12, 15),
- dans lequel le raccord respectif (12, 15) sert à acheminer un fluide à un composant (13) ou à évacuer un fluide d'un composant (13) et est formé sur un boîtier (50) du composant (13),
- dans lequel la conduite de raccordement respective (21, 22, 31, 32) est enfichée parallèlement à une direction axiale (51) dans le raccord respectif (12, 15) et y est étanchée au moyen d'au moins un joint étanche radial (52, 53) vis-à-vis du raccord respectif (12, 15),
- dans lequel la conduite de raccordement respective (21, 22, 31, 32) est fixée axialement sur le boîtier (50) au moyen d'un élément de jonction (20, 30, 40, 60),
- dans lequel l'élément de jonction (20, 30, 40, 60) s'appuie axialement sur une embase (54, 55) de la conduite de raccordement respective (21, 22, 31, 32) et est fixé axialement sur le boîtier (50) au moyen d'au moins un élément de fixation (56),
- dans lequel sont formés sur le boîtier (50) au moins deux raccords (12, 15),
- dans lequel les conduites de raccordement (21, 22, 31, 32) enfichées dans les deux raccords (12, 15) sont fixées axialement sur le boîtier (50) au moyen d'un élément de jonction commun (20, 30, 40 60),
- dans lequel l'élément de jonction (20, 30, 40, 60) présente un premier collier de tube (23, 33, 43a, 43b) qui se trouve sensiblement dans un premier plan spatial pour maintenir la première conduite de raccordement (21, 31),
- dans lequel l'élément de jonction (20, 30, 40, 60) présente un second collier de tube (24, 34, 44a, 44b) qui se trouve sensiblement dans un second plan spatial pour maintenir l'autre conduite de raccordement (22, 32),
- dans lequel le premier plan spatial et le second plan spatial s'étendent parallèlement l'un à l'autre et perpendiculairement à la direction axiale (51),
**caractérisé en ce que** :
- le premier collier de tube (23, 33, 43a, 43b) et le second collier de tube (24, 34, 44a, 44b) sont agencés l'une vis-à-vis de l'autre de sorte que le premier plan spatial et le second plan spatial soient agencés décalés l'un de l'autre, dans lequel l'élément de jonction (30) présente entre le premier collier de tube (23, 33, 43a, 43b) et le second collier de tube (24, 34, 44a, 44b) un gradin (35).

2. Agencement de raccordement selon la revendication 1,
**caractérisé en ce que** :
il est formé sur le boîtier (50) une console de fixation (57), qui présente au moins un élément de contre-fixation (58) élaboré de manière complémentaire à l'élément de fixation respectif (56), lequel élément coopère avec l'élément de fixation respectif (56) pour fixer axialement l'élément de jonction (20, 30, 40, 60) sur le boîtier (50).

3. Agencement de raccordement selon la revendication 2,
**caractérisé en ce que** :
l'élément de fixation respectif (56) et l'élément de contre-fixation associé (58) forment une liaison à vis.

4. Agencement de raccordement selon la revendication 2 ou 3,
**caractérisé en ce que** :
la console de fixation (57) fait saillie axialement sur le raccord respectif (12, 15).

5. Agencement de raccordement selon l'une quelconque des revendications 1 à 4,
**caractérisé en ce que** :
le raccord respectif (12, 15) est conçu sous la forme d'un manchon qui s'écarte axialement du boîtier (50).

6. Agencement de raccordement selon l'une quelconque des revendications 1 à 5,
**caractérisé en ce que** :
l'élément de jonction (20, 30, 40, 60) présente une zone de fixation (59), dans laquelle est agencé l'élément de fixation (56), et au moins une zone de retenue (61) en forme d'arc, qui enserre au moins en partie à la façon d'un collier de serrage la conduite de raccordement respective (21, 22, 31, 32) dans la direction périphérique (62) et s'y appuie axialement.

7. Agencement de raccordement selon la revendication 6,
**caractérisé en ce que** :
la zone de retenue respective (61) présente dans la direction périphérique (62) un profil en coupe transversale sensiblement en forme de L.

8. Agencement de raccordement selon l'une quelconque des revendications 1 à 7,
**caractérisé en ce que** :
- le boîtier (50) présente deux raccords (12,15), dans lesquels est enfichée axialement respectivement une conduite de raccordement (21, 22, 31, 32),
- les au moins deux conduites de raccordement (21, 22, 31, 32) sont enfichées parallèlement l'une à l'autre dans les raccords (12, 15),
- les au moins deux conduites de raccordement (21, 22, 31, 32) sont fixées axialement sur le boîtier (50) au moyen d'un élément de jonction commun (20, 30, 40).

9. Agencement de raccordement selon l'une quelconque des revendications 1 à 8,
**caractérisé en ce que** :
l'élément de jonction (20, 30, 40, 60) est conçu de manière élastique, en particulier sous la forme d'un collier élastique, et est agencé de sorte que l'élément de jonction (20, 30, 40, 60) et la conduite de raccordement respective (21, 22, 31, 32) puissent se raccorder à force.

10. Agencement de raccordement selon l'une quelconque des revendications 1 à 9,
**caractérisé en ce que** :
l'élément de jonction (20, 30, 40) est un chapeau bombé de forme accusée telle que l'élément de jonction (20, 30, 40) et la conduite de raccordement respective (21, 22, 31, 32) puissent se raccorder de manière mécanique.

11. Agencement de raccordement selon l'une quelconque des revendications 1 à 10,
**caractérisé en ce que** :
le premier collier de tube (23, 33, 43, 43b) et/ou le second collier de tube (24, 34, 44a, 44b) est ou sont conçus sensiblement en forme d'arc de cercle et présentent un angle au centre de moins de 360° ou au maximum de 180°.

12. Agencement de raccordement selon l'une quelconque des revendications 1 à 11,
**caractérisé en ce que** :
le premier collier de tube (23, 33, 43a, 43b) et le second collier de tube (24, 34, 44a, 44b) sont agencés l'un par rapport à l'autre de sorte que le premier plan spatial et le second plan spatial coïncident.

13. Agencement de raccordement selon l'une quelconque des revendications 1 à 12,
**caractérisé en ce que** :
- l'élément de jonction (40) présente une première moitié (47a) et une seconde moitié (47b) ou est constitué d'une première moitié (47a) et d'une seconde moitié (47b),
- la première moitié (47a) présente un premier alésage (46a),
- la seconde moitié (47b) est conçue de manière sensiblement symétrique à la première moitié (47a) et présente un second alésage (46b),
- la première moitié (47a) et la seconde moitié (47b) s'assemblent en l'élément de jonction (40) lorsque l'élément de jonction (40) est fixé au boîtier (50) à travers le premier alésage (46a) et le second alésage (46b).
